(19) **Europäisches Patentamt / European Patent Office / Office européen des brevets**

(11) **EP 4 238 685 A1**

(12) **EUROPEAN PATENT APPLICATION**
published in accordance with Art. 153(4) EPC

(43) Date of publication:
**06.09.2023   Bulletin 2023/36**

(21) Application number: **20959771.5**

(22) Date of filing: **28.10.2020**

(51) International Patent Classification (IPC):
**B23K 26/067** (2006.01)

(52) Cooperative Patent Classification (CPC):
**B23K 26/067**

(86) International application number:
**PCT/JP2020/040446**

(87) International publication number:
**WO 2022/091253 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NIKON CORPORATION**
**Minato-ku**
**Tokyo 108-6290 (JP)**

(72) Inventor: **SUDO, Kenta**
**Tokyo 108-6290 (JP)**

(74) Representative: **Hoffmann Eitle**
**Patent- und Rechtsanwälte PartmbB**
**Arabellastraße 30**
**81925 München (DE)**

(54)   **OPTICAL PROCESSING DEVICE**

(57)   An optical processing apparatus includes: a split optical system (14) configured to split a first light beam (L1), which enters thereto, into a second light beam (L2) including a plurality of light beams; a magnification varying optical system (11, 19) that is disposed on at least one of an optical path of the first light beam entering the split optical system and an optical path of the plurality of light beams included in the second light beam emitted from the split optical system; and a condensing optical system (27) configured to condenses the second light beam, wherein an object is processed by the second light beam from the condensing optical system.

FIG. 1

EP 4 238 685 A1

# Description

Technical Field

The present invention relates to an optical processing apparatus.

Background Art

A Patent Literature 1 discloses, as a processing apparatus configured to process an object, a processing apparatus configured to irradiate a surface of an object with a laser beam to form a structure. This type of processing apparatus is required to properly form the structure on the object (the Patent Literature 1).

Citation List

Patent Literature

Patent Literature 1: US4,994,639B

Summary of Invention

According to a first aspect, an optical processing apparatus includes: a split optical system configured to split a first light beam, which enters thereto, into a second light beam including a plurality of light beams; a magnification varying optical system that is disposed on at least one of an optical path of the first light beam entering the split optical system and an optical path of the plurality of light beams included in the second light beam emitted from the split optical system; and a condensing optical system configured to condenses the second light beam, wherein an object is processed by the second light beam from the condensing optical system.

According to a second aspect, in the optical processing apparatus according to the first aspect, the optical processing apparatus further includes a reflection apparatus that is disposed on an optical path of the second light beam between the split optical system and the condensing optical system and that includes a swingable reflective surface, the reflective surface reflects the plurality of light beams included in the second light beam.

According to a third aspect, in the optical processing apparatus according to the first aspect, the plurality of light beams included in the second light beam are three or more light beams, the condensing optical system condenses each of the three or more light beams from the reflection apparatus.

Brief Description of Drawings

[FIG. 1] A diagram schematically illustrating a configuration of an processing optical apparatus in a first example embodiment.

[FIG. 2] A diagram illustrating one example of a light beam split by a split optical system.

[FIG. 3] A diagram illustrating a light beam entering a second magnification varying optical system and a light beam emitted from the second magnification varying optical system.

[FIG. 4] A diagram schematically illustrating a second light beam condensed on a condensing plane by a condensing optical system.

[FIG. 5] A perspective view illustrating one example of a riblet structure formed on an object by using the optical processing apparatus in the first example embodiment.

[FIG. 6] A diagram illustrating another example of the split optical system.

Description of Example embodiments

In the present description, "magnification varying optical system" means an optical system in which at least one of a lateral magnification and an angular magnification of the optical system changes by a movement of an optical member constituting the optical system. Therefore, the magnification varying optical system includes a zoom lens and a varifocal lens whose focal length changes by the movement of an optical member, or an optical systems whose angular magnification changes by the movement of the optical member. The optical system whose angular magnification changes may change the angular magnification while remaining an afocal system.

(Optical Processing Apparatus in First Example Embodiment)

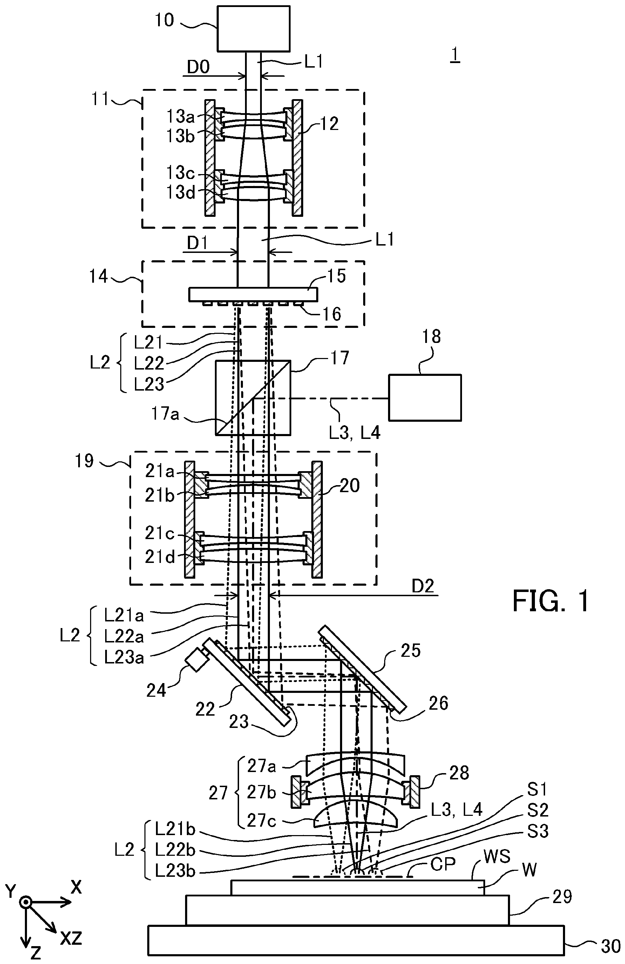

FIG. 1 is a diagram that schematically illustrates a configuration of a optical processing apparatus 1 in a first example embodiment. An X direction, a Y direction, and a Z direction indicated by arrows in FIG. 1 and below-described each drawing are perpendicular to one another, and each of the X direction, the Y direction, and the Z direction indicates the same direction in each drawing. An XZ direction indicated by an arrow in FIG. 1 is an intermediate direction between the X direction and the Z direction described above, namely, indicates a direction that is perpendicular to the Y direction and that is away from each of the X direction and the Z direction by 45 degree. In the below-described description, the directions indicated by arrows are referred to as a +X direction, a +Y direction, a +Z direction and a +XZ direction, respectively. Moreover, a position in the X direction, a position in the Y direction, and a position in the Z direction are referred to as an X position, the Y position, and a Z position.

The optical processing apparatus 1 in the first example embodiment is an apparatus that includes a first magnification varying optical system 11, a split optical system 14, a second magnification varying optical system 19, a first reflective member 24, a condensing optical system 27, a reflection apparatus 22, and so on. The optical processing apparatus 1 irradiates a surface (a processing target surface WS) of an object W, which is a processing target object, with a light supplied from a light source apparatus 10.

The light source apparatus 10 such as a laser supplies, as an example, a generally collimated light having a diameter D0, namely, a first light beam L1 whose opening angle (a divergence angle or a convergence angle) is almost zero. Here, The diameter of the light beam is a full width of a range in which an intensity is $1/e^2$ times of a peak intensity in a light beam having a Gaussian type of cross-sectional intensity distribution, for example. The supplied first light beam L1 having the diameter D0 propagates in the -Z direction to enter the first magnification varying optical system 11.

The first magnification varying optical system 11 is a magnification varying optical system that is an afocal system and that includes a first lens barrel 12 and four lenses 13a to 13d, as one example. The first lens barrel 12 moves front group lenses 13a and 13b and rear group lenses 13c and 13d in the Z direction, respectively. This changes an angular magnification of the first magnification varying optical system 11 as a whole.

When the first magnification varying optical system 11 is the afocal system, the first light beam L1, which is the generally collimated light entering the first magnification varying optical system 11, is expanded or reduced in the diameter by the first magnification varying optical system 11 and is emitted from the first magnification varying optical system 11 as the light beam having the diameter D1. The diameter D1 of the first light beam L1 is changed by changing the Z positions of the front group lenses 13a, 13b and rear group lenses 13c, 13d of the first magnification varying optical system 11.

The first light beam L1 having the diameter D1 emitted from the first magnification varying optical system 11 enters the split optical system 14. Therefore, it can be said that the first magnification varying optical system 11 is disposed on an optical path of the first light beam L1 entering the split optical system 14.

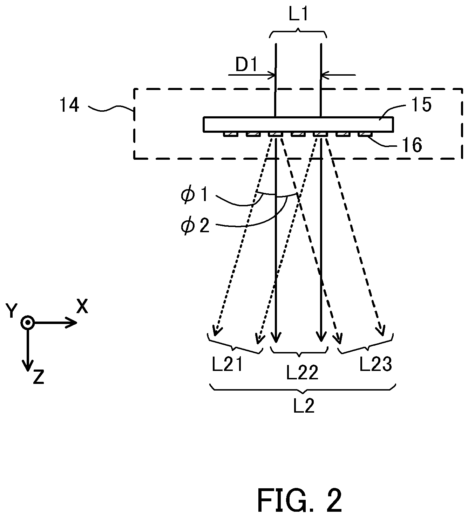

FIG. 2 is a diagram that illustrates one example of the light beam split by the split optical system 14. The split optical system 14 includes a diffractive optical element 16, which is a phase-type of diffractive grating that is a one-dimensional translucent type of diffractive grating as an example, on a translucent substrate 15, as one example. The diffractive optical element 16 is an element in which gratings extending in the Y direction are periodically arranged along the X direction, as one example. Note that a concave and convex pattern (a phase pattern) formed on the diffractive optical element 16 is not limited to a one-dimensional pattern. For example, a phase-type of diffractive optical element having a two-dimensional concave and convex pattern (phase pattern) disclosed in US Patent No. 5,580,300 may be used. Moreover, the diffractive optical element 16 may be an amplitude-type of diffractive optical element.

The first light beam L1 propagating in the +Z direction is diffracted and split in the X direction by the diffractive optical element 16. A zeroth-order diffracted light L22 illustrated by a solid line, which is straight light, propagates in the +Z direction. A +first-order diffracted light L23 illustrated by a dashed line propagates in a direction that is away from the +Z direction toward the +X direction by an angle $\varphi2$. A -first-order diffracted light L2¥1 illustrated by a dashed line propagates in a direction that is away from the +Z direction toward the -X direction by an angle $\varphi1$.

Note that a higher-order diffracted light such as ±second-order or more may be generated from the diffractive optical element 16 in addition to these lights.

In the below-described description, the zeroth-order diffracted light L22, the +first-order diffracted light L23, the -first-order diffracted light L21 and the higher-order diffracted light such as the ±second-order or more are collectively or individually referred to as a second light beam L2. Each diffracted light (L22a, L23a, L21a, and so on) after these diffracted lights have passed through the second magnification varying optical system 19 and each diffracted light (L22b, L23b, L21b, and so on) after these diffracted light have passed through the condensing optical system 27 are also collectively or individually referred to as the second light beam L2.

Namely, the second light beam L2 includes three or more light beams in a cross-section perpendicular to its propagating direction, including the zeroth-order diffracted light L22, the +first-order diffracted light L23, and the -first-order diffracted light L21, for example.

The angle $\varphi1$ between a propagating direction of the zeroth-order diffracted light L22 and a propagating direction of the -first-order diffracted light L21 is larger than 0 degree and smaller than 90 degree, as one example. Similarly, the angle $\varphi2$ between the propagating direction of the zeroth-order diffracted light L22 and a propagating direction of the +first-order diffracted light L23 is larger than 0 degree and smaller than 90 degree, as one example. Even when the higher-order diffracted light such as the ±second-order light or more is considered, an angle between axes along propagating directions of two adjacent light beams among three or more light beams (the zeroth-order diffracted light L22, the +first-order diffracted light L23, the -first-order diffracted light L21, and so on) included in the second light beam L2 emitted from the split optical system 14 is an acute angle.

Next, the description continues again with reference to Fig. 1.

The second light beam L2 including the plurality of light beams split by the split optical system 14 enters a combining optical system 17 that includes, as one example, a dichroic beam splitter. The combining optical system 17 is an optical system configured to merge (combine) the second light beam L2 entering from the split optical system 14 and a third light beam L3 entering from a position detection unit 18, which is illustrated by a two-pointed dashed line, and emits it toward the second magnification varying optical system 19.

As one example, the second light beam L2 is a light having a wavelength λ2 and the third light beam L3 is a light having a wavelength λ3 that is different from the wavelength λ2, and the dichroic surface 17a of the combining optical system 17 allows the second light beam L2 having the wavelength λ2 to pass therethrough and reflects the third light beam L3 having the wavelength λ3. Moreover, as described below, the third light beam L3 is reflected or scattered by the object W and enters the combining optical system 17 from the second magnification varying optical system 19 side as a fourth light beam L4. The combining optical system 17 guides the fourth light beam L4, which has entered thereto from the second magnification varying optical system 19 side, to the position detection unit 18. The position detection unit 18 will be described later.

The combining optical system 17 is not limited to the above-described dichroic beam splitter, and may include a flat plate glass including a dichroic mirror. Alternatively, a polarized beam splitter may be used when a linear polarized light in which polarized planes of the second light beam L2 and the third light beam L3 are generally perpendicular to each other is used.

The second light beam L2 that has been emitted from the split optical system 14 and further has passed through the combining optical system 17 enters the second magnification varying optical system 19. Therefore, it can be said that the second magnification varying optical system 19 is disposed on an optical path of the second light beam L2 emitted from the split optical system 14.

Note that the third light beam L3 merged with the second light beam L2 by the combining optical system 17 also enters the second magnification varying optical system 19 together with the second light beam L2.

The second magnification varying optical system 19 is a magnification varying optical system that is an afocal system and that includes a second lens barrel 20 and four lenses 21a to 21d, as one example. The second lens barrel 20 moves front group lenses 21a and 21b and rear group lenses 21c and 21d in the Z direction, respectively. This changes an angular magnification of the second magnification varying optical system 19 as a whole.

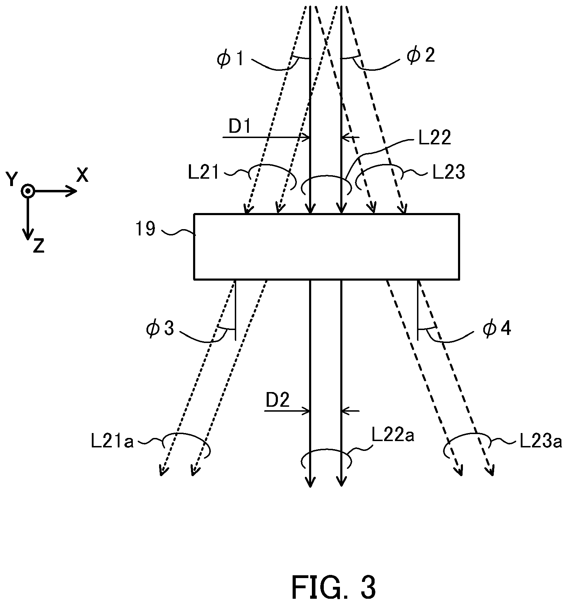

FIG. 3 is a diagram that illustrates the second light beam entering the second magnification varying optical system 19 and the second light beam emitted from the second magnification varying optical system. As described above, the propagating direction of the zeroth-order diffracted light L22, which is a part of the second light beam L2 entering the second magnification varying optical system 19, is the +Z direction. The propagating direction of the -first-order diffracted light L21 is the direction that is away from the +Z direction toward the -X direction by the angle φ1, and the propagating direction of the +first-order diffracted light L23 is the direction that is away from the +Z direction toward the +X direction by the angle φ2. The diameters of the entering second light beams L21, L22 and L23 are all D1.

The second light beams L21, L22 and L23 entering the second magnification varying optical system 19 are emitted from the second magnification varying optical system 19 as second light beams L21a, L22a and L23a, respectively. The zeroth-order diffracted light L22a corresponding to the entering zeroth-order diffracted light L22 is emitted in the +Z direction. The -1st-order diffracted light L21a corresponding to the entering -1st-order diffracted light L21 is emitted in a direction that is away from the +Z direction toward the -X direction by an angle φ3. The +first-order diffracted light L23a corresponding to the entering +first-order diffracted light L23 is emitted in a direction that is away from the +Z direction toward the +X direction by an angle φ4. The diameters of the emitted second light beams L21a, L22a and L23a are all D2.

When the angular magnification of the second magnification varying optical system 19 changes, the angle φ3, the angle φ4 and the diameter D2 described above change. Since the second magnification varying optical system 19 is the afocal system, opening angles of the emitted second light beams L21a, L22a and L23a do not change even when the angular magnification of the second magnification varying optical system 19 changes.

Incidentally, although the illustration is omitted in FIG. 3, the ±second-order diffracted light or more emitted from the second magnification varying optical system 19 is also similar to the +first-order diffracted light L23a and the -first-order diffracted light L21a described above, although an angle between its propagating direction and the +Z direction is different. Furthermore, the diameter, alternatively, the opening angle or the propagating direction of the third light beam L3 is also changed by the second magnification varying optical system 19.

Even in the below-described description, the second light beam L2 includes the ±second-order diffracted light or more. However, the description of the ±second-order diffracted light or more is omitted, because the ±second-order diffracted light or more is different from the +first-order diffracted light L23a and the -first-order diffracted light L21a only in a deviation angle of its propagating direction from the +Z direction, and its other behavior is the same as that of the +first-order diffracted light L23a and the -first-order diffracted light L21a.

Next, the description continues again with reference to Fig. 1.

The second light beams L21a, L22a, and L23a and the non-illustrated ±second-order diffracted light or more emitted from the second magnification varying optical system 19 enter a reflective surface 23 provided on the reflection apparatus 22. The reflective surface 23 is a surface disposed along a plane parallel to the XZ direction and the Y direction, as one example. The second light beam L22a propagating in the +Z direction to enter the reflective surface 23 is reflected by the reflective surface 23 toward the +X direction.

The second light beam L21a propagating in the direction that is away from the +Z direction toward the -X direction by the angle φ3 to enter the reflective surface 23 is reflected by the reflective surface 23 toward a direction that is away from the +X direction toward the -Z direction by the angle φ3. Moreover, the second light beam L23a propagating in the direction that is away from the +Z direction toward the +X direction by the angle φ4 to enter the reflective surface 23 is reflected by the reflective surface 23 toward a direction that is away from the +X direction toward the +Z direction by the angle φ3.

The reflective surface 23 is held by a driving member 24 through the reflection apparatus 22 so as to be swingable around the XZ direction within a range of a predetermined angle, as one example. A so-called Galvano mirror may be used as the reflection apparatus 22, the reflective surface 23, and the driving member 24, as an example. When the reflective surface 23 swings around the XZ direction within the range of the predetermined angle, a propagating direction of each of the second light beams L21a, L22a and L23a reflected by the reflective surface 23 changes (swings) between two directions that are away from the above-described direction toward the ±Y direction by an angle that is twice of the above-described predetermined angle, respectively. Note that a component for actively changing an emitted angle of the second light beam is not limited to the Galvanometer mirror, but a polygon mirror or an AOD (Acousto-Optic Deflector) may be used, for example.

The second light beams L21a, L22a, and L23a reflected by the reflective surface 23 enter a second reflective surface 26 provided on the second reflection apparatus 25. The second reflective surface 26 is a surface disposed along a plane parallel to the XZ direction and the Y direction, as one example, and reflects the propagating directions of the second light beams L21a, L22a, and L23a, which propagating in the above described direction centered on the +X direction to enter the second reflective surface 26, toward each direction centered on the +Z direction.

The second reflection apparatus 25 may not be held so as to be swingable, but may be held to be fixed to the entire optical processing apparatus 1. Note that the second reflection apparatus 25 may be held so as to be swingable.

The second light beams L21a, L22a, and L23a reflected by the second reflective surface 26 enter the condensing optical system 27. The second light beams L21a, L22a, and L23a are converted by the condensing optical system 27 into the second light beams L21b, L22b, and L23b each of which is a converged light beam. On the condensing plane CP, the second light beam L21b, the second light beam L22b, and the second light beam L23b are condensed at an condensing part S1, an condensing part S2, and a condensing part S3, respectively.

The condensing optical system 27 includes three lenses 27a to 27c, as one example, one lens 27b of which is held by a focal position changing member 28. By moving the lens 27b in the Z direction by the focal position changing member 28, a focal position (a position of the condensing plane CP) of the condensing optical system 27 is adjustable. Incidentally, instead of or in addition to a configuration in which the focal position is changed by moving at least a part of the plurality of lenses included in the condensing optical system 27 in the Z direction, an optical member (typically, a lens) that is movable along the propagating direction of the light may be disposed on an optical path of the second light beam and / or the third light beam between the combining optical system 17 and the condensing optical system 27.

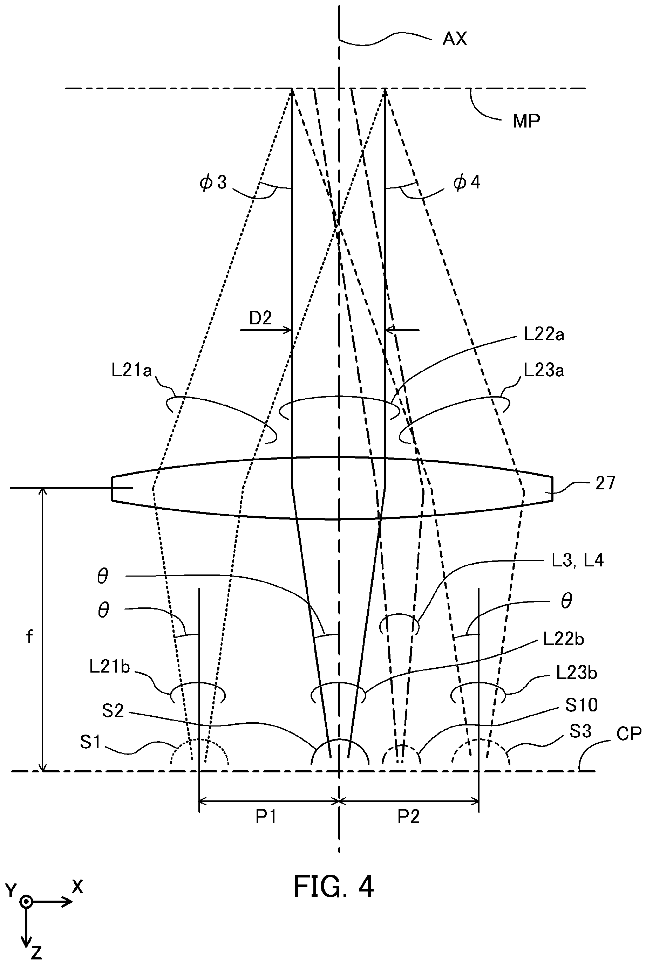

FIG. 4 is a schematic diagram that illustrates the second light beams L21b to L23b that are condensed on the condensing plane CP by the condensing optical system 27. Incidentally, In FIG. 4, the condensing optical system 27 is illustrated as a single lens for simplification. Moreover, a plane MP on which the reflective surface 23 is disposed is illustrated in FIG. 4 and an illustration of the second reflective surface 26 is omitted. Thus, in FIG. 4, the second light beams L21a to L23a emitted from the reflective surface 23 are illustrated as light beams propagating in a direction centered on the +Z direction. The diameters of the second light beams L21a to L23a are all D2, as described above.

As described above, the second light beams L21a to L23a entering the condensing optical system 27 are converted by refractive force of the condensing optical system 27 into the second light beams L21b to L23b each of which is a converged light, and are condensed on the three condensing parts S1 to S3, respectively, which are arranged along the X direction. The third light beam L3 is also condensed by the condensing optical system 27 on a second condensing part S10 on the condensing plane CP.

An opening angles θ of the second light beams L21b to L23b are determined by an equation (1) using a focal length f of the condensing optical system 27.

$$2 \times f \times \sin(\theta) = D2 \text{ --- } (1)$$

The diameters of the second light beams L21a to L23a are all D2 and equal to one another, and thus, the opening angles θ of the second light beams L21b to L23b are also angles equal to one another.

Diameters D3 of the three condensing parts S1 to S3 on the condensing plane CP are expressed by an equation (2) using a wavelength λ2 of the second light beam L2 and the opening angle θ.

$$D3 = 2 \times \lambda2 \, / \, \{\pi \times \sin(\theta)\} \text{ --- } (2)$$

By changing the angular magnification of the second magnification varying optical system 19, the diameters D2 of the second light beams L21a to L23a change, and thus, the opening angles θ of the second light beams L21b to L23b are changeable. As a result, the diameters D3 of the three condensing parts S 1 to S3 are changeable from the equation (2).

Incidentally, by changing the angular magnification of the first magnification varying optical system 11, the diameters D2 of the second light beams L21a to L23a are changeable in the same way. This is because changing the angular magnification of the first magnification varying optical system 11 changes the diameter D1 of the first light beam L1 emitted from the first magnification varying optical system 11, and the diameters D2 of the second light beams L21a to L23a emitted from the second magnification varying optical system 19 are proportional to the diameter D1 of the first light beam L1.

Therefore, by changing the angular magnification of the first magnification varying optical system 11, the opening angles θ of the second light beams L21b to L23b are changeable, and the diameters D3 of the three condensing parts S1 to S3 are changeable.

The condensing optical system 27 is a so-called fθ lens system. Note that a projection characteristic of the condensing optical system 27 is not limited to fθ. When the projection characteristic of the condensing optical system 27 is fθ, distances from the optical axis AX of the condensing optical system 27 to the condensing parts S1 to S3 on the condensing plane CP is proportional to deviation angles of the propagating directions of the second light beams L21a to L23a, which are emitted from the reflective surface 23, from the +Z direction.

The second light beam L22a propagates in the +Z direction from the reflective surface 23, and thus, a position in the X direction of the condensing part S2 of the second light beam L22b condensed by the condensing optical system 27 is coincident with the optical axis AX.

The second light beam L21a propagates from the reflective surface 23 in the direction that is away from the +Z direction toward the -X direction by the angle φ3, and thus, a position in the X direction of the condensing part S1 is a position that is away from the optical axis AX toward the -X direction by a distance P1. Moreover, the second light beam L23a propagates from the reflective surface 23 in the direction that is away from the +Z direction toward the +X direction by the angle φ4, and thus, a position in the X direction of the condensing part S3 is a position that is away from the optical axis AX toward the +X direction by a distance P2. The distance P1 and the distance P2 may be regarded as intervals between the condensing parts S1 to S3 in the X direction, and thus, the distance P1 and the distance P2 are referred to as an interval P1 and an interval P2, respectively, in the below-described description.

The distance P1 is a value calculated by multiplying the angle φ3 by the focal length of the condensing optical system 27, and the distance P2 is a value calculated by multiplying the angle φ4 by the focal length of the condensing optical system 27. As described above, the angle φ3 and the angle φ4 are changeable by changing the angular magnification of the second magnification varying optical system 19. Therefore, by changing the angular magnification of the second magnification varying optical system 19, the interval P1 and the interval P2 in the X direction of the plurality of condensing parts S1 to S3 are changeable.

In summary, by changing the angular magnification of the first magnification varying optical system 11, the opening angles θ of the second light beams L21b to L23b are changeable, and thus, the diameters D3 of the plurality of condensing parts S1 to S3 are changeable. By changing the angular magnification of the second magnification varying optical system 19, the opening angles θ of the second light beams L21b to L23b are changeable, and thus, the diameters D3 of the plurality of condensing parts S1 to S3 are changeable, and, the interval P1 and P2 in the X direction of the plurality of condensing parts S1 to S3 are changeable.

In other words, by changing the angular magnification of the second magnification varying optical system 19, the interval P1 and the interval P2 in the X direction of the plurality of condensing parts S1 to S3 can be changed to be desired values. Although the opening angles θ of the second light beams L21b to L23b are also changed by this, the opening angles θ of the second light beams L21b to L23b can be set to be desired values by changing the angular magnification of the first magnification varying optical system 11. Therefore, the opening angles θ of the plurality of second light beams L21b to L23b emitted from the condensing optical system 27 and the intervals P1 and P2 in the X direction of the plurality of condensing parts S1 to S3 condensed on the condensing plane CP are changeable independently by changing the magnification of the first magnification varying optical system 11 and the second magnification varying optical system 19.

When the reflective surface 23 of the reflection apparatus 22 swings around the XZ direction within the range of the predetermined angle as described above, the propagating direction of the second light beam L2 reflected by the reflective surface 23 swings from the above-described direction, which is approximately the +X direction, toward the ±Y direction by an angle that is twice of the predetermined angle. Therefore, when the reflective surface 23 of the reflection apparatus 22 swings, the plurality of condensing parts S1 to S3 swing (move) in the Y direction on the condensing plane CP.

In the optical processing apparatus 1 in the first example embodiment, the condensing parts S1 to S3 of the plurality of second light beams L2 condensed on the condensing plane CP are formed to be arranged along the X direction. In other words, it can be said that the split optical system 14 splits the first light beam L1 into the plurality of second light beams L2 so that the first light beam L1 is condensed at the plurality of condensing parts S1 to S3 arranged along the X direction in the condensing plane CP.

Moreover, it can be said that the reflective surface 23 of the reflection apparatus 22 swings around the Y direction, which intersects with the X direction, so that each of the condensing parts S1 to S3 moves on the condensing plane CP.

The X direction may be referred to as a first direction and the Y direction may be referred to as a second direction.

The processing target surface WS of the object W, which is the processing target object, is disposed on the condensing plane CP. The optical processing apparatus 1 in the first example embodiment includes a sample table 29 that holds the object W and that moves in the X direction on a guide 30.

In a state where the object W and the sample table 29 are disposed at a predetermined X position, each of the plurality of condensing parts S1 to S3 may be moved (scanned) in the Y direction on the processing target surface WS of the object W by swinging the reflective surface 23 of the reflection apparatus 22 around the XZ direction within the range of the predetermined angle.

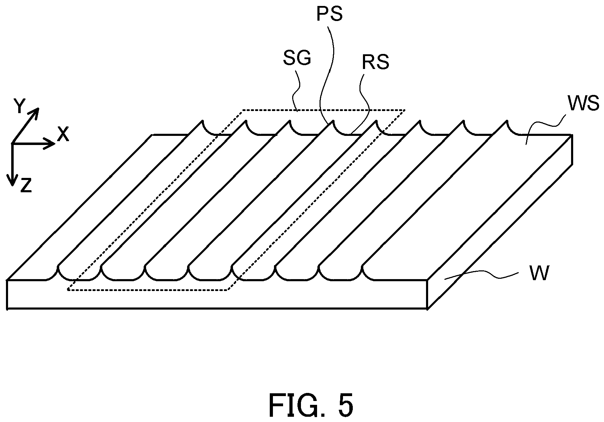

FIG. 5 is a perspective view that illustrates one example of a riblet structure formed on the processing target surface WS of the object W by using the optical processing apparatus 1 in the first example embodiment. When the riblet structure is formed, the condensing plane CP is swept along the Y direction with the plurality of condensing parts S to S3 arranged along the X direction on the condensing plane CP in a state where while the processing target surface WS is disposed to be coincident with the condensing plane CP. This allows concave part group SG including, for example, three concave parts RS, each of which extends along the Y direction and which are periodically arranged along the X direction, to be formed on the processing target surface WS. The concave part RS may be referred to as a groove.

By sweeping the condensing plane CP along the Y direction with the condensing parts S1 to S3 a plurality of times while sequentially moving the X positions of the object W and the sample table 29, the riblet structure including a number of concave parts RS may be formed on the processing target surface WS. Here, the riblet structure may be regarded to include a number of convex parts PS or concave-convex parts. The movement of X positions of the obj ect W and the sample table 29 may be a continuous movement allowing them to move in the X direction at a generally constant speed.

Each concave part RS may be formed by melting, evaporating or sublimating a part of the processing target surface WS of the object W such as a metal by the irradiation with the second light beam L2 that is a processing light. Alternatively, the convex part may be formed by melting and solidifying a powder of a metal or the like supplied on the processing target surface WS of the obj ect W such as a metal by the irradiation with the second light beam L2, thereby forming the concave part between the convex part and the convex part. Alternatively, the concave part may be formed by melting, evaporating or sublimating a coating film on the processing target surface WS of the object W by the irradiation with the second light beam L2.

Note that the number of the plurality of condensing parts S1 to S3 arranged along the the X direction on the condensing plane CP is not limited to three described above, but may be any number such as two or more.

The optical processing apparatus 1 in the first example embodiment forms the plurality of condensing parts S1 to S3 arranged along the X direction on the condensing plane CP and processes the processing target surface WS of the object by collectively moving (scanning) the plurality of condensing parts S1 to S3 in the Y direction, and therefore, the processing speed can be improved compared to a case where it is processed by scanning one condensing part.

Moreover, since the optical processing apparatus 1 in the first example embodiment is allowed to change the diameter D3 of each of the plurality of condensing parts S arranged along the X direction on the condensing plane CP (alternatively, the opening angles θ of the second light beams L21b to L23b propagating toward the condensing plane CP) and the intervals P1 and P2 in the X direction, a width of each concave part RS (alternatively, a width of the convex part PS) formed on the processing target surface WS of the object W, an interval between the plurality of concave parts RS along the X direction (alternatively, an interval between the plurality of convex parts PS along the X direction), and a ratio between the width of the concave part RS and the convex part PS may be changed freely. Therefore, a plurality of types of structures may be formed on the processing target surface WS according to a usage or the like of the object W.

As one example, an inclination of a slope surface of the concave part RS (an inclination of a slope surface of the convex part PS) of the riblet structure may be changed by changing the opening angles θ of the second light beams L21b to L23b propagating toward the condensing plane CP. Incidentally, when the concave part RS extending in the Y direction is formed, the processing may be performed by moving the condensing parts S in the Y direction, then, the X positions of the condensing parts S may be moved in the X direction, and then, the processing may be performed by moving the condensing parts S in the Y direction. In this case, a moving distance of the condensing parts S in the X direction may be smaller than the diameter D3 of the condensing part.

The third light beam L3, which is emitted from the position detection unit 18 and merged (combined) with the second light beam L2 by the combining optical system 17, is condensed on the second condensing part S10 on the condensing plane CP through the second magnification varying optical system 19, the reflective surface 23, the second reflective surface 26, and the condensing optical system 27, as with the second light beam L2. Then, the processing target surface WS of the object W disposed on the condensing plane CP is irradiated with the third light beam L3. The third light beam L3 with which the processing target surface WS is irradiated is reflected or scattered by the processing target surface WS and at least a part thereof propagates, as the fourth light beam L4, backwardly from the third light beam L3 along an optical path that is generally coincident with that of the third light beam L3 to return to the combining optical system 17.

The fourth light beam L4 is reflected by the dichroic surface 17a of the combining optical system 17, led to the position detection unit 18, and optically received by the position detection unit 18.

The position detection unit 18 detects the position of the object W, for example in the Z direction, based on a received fourth light beam L4. The position detection unit 18 may include, for example, an interferometer. A three-dimensional shape measurement apparatus disclosed in Japanese Patent No. 5231883 may be used as the position detection unit.

Alternatively, the position detection unit 18 may detect the position in the X direction or the Y direction of a predetermined-shaped part of the processing target surface WS of the object W.

The first magnification varying optical system 11 and the second magnification varying optical system 19 are not limited to the afocal system, but may be a so-called zoom lens system or a varifocal system in which a focal length is changeable. In this case, not only the diameter but also the opening angle of the light beam emitted from the first magnification varying optical system 11 or the second magnification varying optical system 19 changes as the magnification of the first magnification varying optical system 11 or the second magnification varying optical system 19 changes.

Moreover, the number of lenses included in the first magnification varying optical system 11, the second magnification varying optical system 19, and the condensing optical system 27 is not limited to the above-described number, but each may have any number of lenses respectively. Alternatively, at least one of the first magnification varying optical system 11, the second magnification varying optical system 19, and the condensing optical system 27 may be a reflective optical system or a reflective and refractive optical system including a reflective optical member such as a mirror or a prism. At least one of the first magnification varying optical system 11, the second magnification varying optical system 19, and the condensing optical system 27 may be a diffraction-type optical system.

In the above-described example, the combining optical system 17 is disposed between the split optical system 14 and the second magnification varying optical system 19, however, may be disposed in the second magnification varying optical system 19 or between the second magnification varying optical system 19 and the reflection apparatus 22. Incidentally, when there is no need to move the third light beam L3 on the condensing plane CP, the combining optical system may be disposed at a position that is away from the reflection apparatus 22 toward the condensing plane CP.

Note that the optical processing apparatus 1 may not include one of the first magnification varying optical system 11 or the second magnification varying optical system 19. As described above, when the optical processing apparatus 1 includes the second magnification varying optical system 19, the opening angles θ of the second light beams L21b to L23b are changeable and the intervals P1 and P2 between the plurality of condensing parts S1 to S3 in the X direction are also changeable by changing the magnification of the second magnification varying optical system 19. Moreover, when the optical processing apparatus 1 includes the first magnification varying optical system 11, the opening angles θ of the second light beams L21b to L23b are changeable by changing the magnification of the first magnification varying optical system 11.

The sample table 29 may move the held object W in the X direction and the Y direction. In this case, relative positions of the condensing parts S1 to S3 in the processing target surface WS of the object W may be moved (scanned) in the Y direction by moving the object W relative to the condensing parts S1 to S3 by the sample table 29, instead of swinging the reflection apparatus 22 and the reflective surface 23. Therefore, in this case, the optical processing apparatus 1 does not need to have a reflection apparatus 22 and a reflective surface 23.

In the above-described description, the second reflection apparatus 25 and the second reflective surface 26 are fixed to the entire optical processing apparatus 1, however, the second reflection apparatus 25 and the second reflective surface 26 may be swung around the Y direction within a range of a predetermined angle. This allows the condensing parts S1 to S3 to be moved (scanned) in the X direction on the condensing plane CP.

In this case, the plurality of condensing parts S1 to S3 on the condensing plane CP are formed to be arranged along the Y direction on the condensing plane CP. Moreover, the condensing parts S1 to S3 are moved (scanned) in the X direction on the condensing plane CP by swinging the reflective surface 23. Therefore, in this case, the optical processing apparatus 1 may not include the sample table 29 that holds the object W and moves it in the X direction.

In the above-described description, the split optical system 14 splits the first light beam L1 into the plurality of second light beams L2 in the X direction, and the reflection apparatus 22 and the reflective surface 23 swing around the XZ direction within the range of the predetermined angle. However, not limited to this, the split optical system 14 may splits the first light beam L1 into the plurality of second light beams L2 in the Y direction, and the reflection apparatus 22 and the reflective surface 23 may swing around the Y direction within the range of the predetermined angle.

The split optical system 14 may not necessarily split the first light beam L1 so that the plurality of condensing parts S1 to S3 are arranged along the X direction or the Y direction on the condensing plane CP. Instead, the first light beam L1 may be split into the second light beam L2 so that the X positions or the Y positions of the plurality of condensing parts S1 to S3 on the condensing plane CP are different from each other.

Moreover, the split optical system 14 may split the first light beam L1 into two second light beams L2.

The optical processing apparatus 1 may not include light source apparatus 10, and the first light beam L1 may be supplied thereto from a light source, which is disposed outside the optical processing apparatus 1, through a light guiding member such as an optical fiber, for example.

The split optical system 14 is not limited to the above-described configuration including the diffractive optical element 16, but may be any optical system as long as it splits the first light beam L1 into the plurality of second light beams L2 whose propagating directions are separated by a predetermined angle.

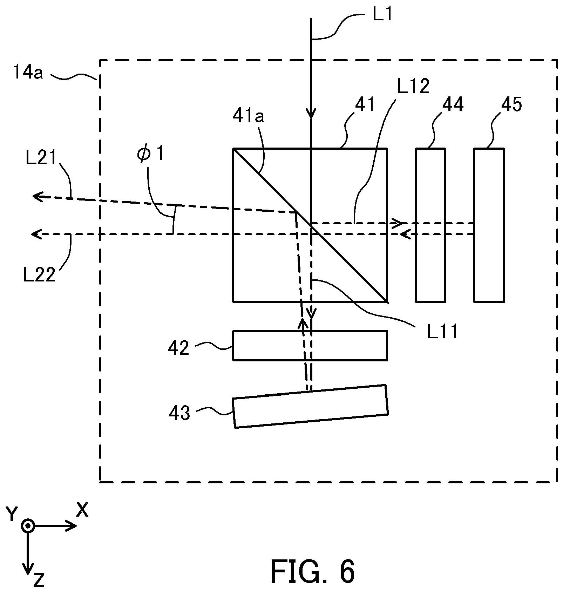

FIG. 6 illustrates, as another example of the split optical system 14, a split optical system 14a including a reflective member. In the split optical system 14a, the first light beam L1 entering a polarized beam splitter 41 is split into a first light beam L11 being a P-polarize light passing through a reflective surface 41a and a first light beam L12 being a S-polarized light reflected by the reflective surface 41a.

The first light beam L1 being the P-polarized light passing through the polarized beam splitter 41 is converted to a circularly polarized light by a quarter wavelength plate 42 and reflected by a reflective mirror 43. The light then passes through the quarter wavelength plate 42 again to be converted to a S-polarized light, is then reflected by the reflective surface 41a of the polarized beam splitter 41, and is then emitted from the split optical system 14a as the second light beam L21.

The first light beam L1 being the S-polarized light reflected by the polarized beam splitter 41 is converted to a circularly polarized light by a quarter wavelength plate 42 and reflected by a reflective mirror 45. The light then passes through the quarter wavelength plate 44 again to be converted to a P-polarized light, then passes through the reflective surface 41a of the polarized beam splitter 41, and is then emitted from the split optical system 14a as the second light beam L22.

In this case, by disposing the reflective surface of the reflective mirror 43 and the reflective surface of the reflective mirror 45 so that their directions are slightly different from perpendicular directions, the propagating directions of the second light beam L21 and the second light beam L22 are displaced from each other by an angular difference $\varphi1$, for example.

In a configuration illustrated in FIG. 6, the propagating directions of the second light beam L21 and the second light beam L22 are generally along the -X direction, however, the propagating directions of the second light beam L21 and the second light beam L22 may be converted to generally the +Z directions while maintaining the above-described angle difference $\varphi1$.

The light beams emitted from the split optical system 14a are the two light beams L21 and L22, however, one second light beam L1 may be further split into more second light beams L2 by arranging a plurality of split optical systems 14a in series. When the plurality of split optical systems 14a are arranged in series, a quarter wavelength plate may be disposed between them to convert the second light beam L21 and the second L22 emitted from one split optical system 14a to circularly polarized light.

(Effect of Optical Processing Apparatus in First Example Embodiment)

(1) The above described optical processing apparatus 1 in the first example embodiment includes: the split optical system 14 configured to split the first light beam L1, which enters thereto, into the second light beam L2 including the plurality of light beams (L21, L22, L23); the magnification varying optical systems (11, 19) that is disposed on at least one of the optical path of the first light beam L1 entering the split optical system 14 and the optical path of the plurality of light beams included in the second light beam L2 emitted from the split optical system 14; and the condensing optical system 27 configured to condenses the second light beam L2, the object W is processed by the second light beam L2 from the condensing optical system 27.

This configuration allows the plurality of condensing parts S1 to S3 to be formed on the processing target surface WS of the object W, and the opening angles θ of the second light beams L21b to L23b condensed on the condensing parts S1 to S3, respectively, are changeable by changing the magnification of the magnification varying optical systems (11, 19).

Therefore, it is possible to realize the optical processing apparatus 1 that has a high processing capacity and that is capable of simultaneously processing a plurality of parts on the processing target surface WS. Moreover, it is possible to realize the optical processing apparatus 1 configured to change (adjust) the diameters D3 of the condensing parts S1 to S3, namely, to easily change the size of a processing area of the processing target surface WS.

(2) The optical processing apparatus may further include the reflection apparatus 22 that is disposed on the optical path of the second light beam L2 between the split optical system 14 and the condensing optical system 27 and that includes the swingable reflective surface 23 that reflects the plurality of light beams included in the second light beam L2.

In this configuration, the plurality of condensing parts S 1 to S3 formed on the processing target surface WS can be moved (scanned) on the processing target surface WS by swinging the reflective surface 23. Thus, it is possible to realize the optical processing apparatus 1 that has the higher processing capacity.

(3) In the optical processing apparatus 1, the plurality of light beams included in the second light beam L2 may be three or more light beams (L21, L22, L23), the condensing optical system 27 may condense each of the three or more light beams from the split optical system.

By this configuration, it is possible to simultaneously process three or more parts on the processing target surface WS, and it is possible to realize the optical processing apparatus 1 that has the higher processing capacity.

The present invention is not limited to the above-described content. Other possible aspect within a scope of a technical concept of the present invention is also included within the scope of the present invention. The present example embodiment may combine all or a part of the above-described aspects.

Description of Reference Codes

1: optical processing apparatus
10: light source apparatus
11: first magnification varying optical system
14: split optical system
17: combining optical system
L1: first light beam
L2: second light beam
L3: third light beam
18: position detection unit
22: reflection apparatus
23: reflective surface
27: condensing optical system
CP: condensed plane
29: sample table
30: guide
W: object
WS: processing target surface

**Claims**

1. An optical processing apparatus comprising:

   a split optical system configured to split a first light beam, which enters thereto, into a second light beam including a plurality of light beams; a magnification varying optical system that is disposed on at least one of an optical path of the first light beam entering the split optical system and an optical path of the plurality of light beams included in the second light beam emitted from the split optical system; and a condensing optical system configured to condenses the second light beam, wherein an object is processed by the second light beam from the condensing optical system.

2. The optical processing apparatus according to claim 1, wherein

   the plurality of light beams included in the second light beam are three or more light beams, the optical processing apparatus further comprises a reflection apparatus that is disposed on an optical path of the second light beam between the split optical system and the condensing optical system and that includes a swingable reflective surface, the reflective surface reflects the three or more light beams included in the second light beam, the condensing optical system condenses each of the three or more light beams from the reflection apparatus.

3. The optical processing apparatus according to claim 2, wherein

   the split optical system splits the first light beam so that respective condensing parts of the three or more light beams condensed on a condensing plane by the condensing optical system are arranged along a first direction, the reflective surface of the reflection apparatus swings so that the respective condensing parts move along a second direction intersecting with the first direction.

4. The optical processing apparatus according to claim 2 or 3, wherein
   an angle between axes along propagating directions of two adjacent light beams of the three or more light beams included in the second light beam emitted from the split optical system is an acute angle.

5. The optical processing apparatus according to any one of claim 1 to claim 4, wherein
   the magnification varying optical system includes: a first magnification varying optical system disposed on the optical path of the first light beam entering the split optical system; and a second magnification varying optical system disposed on the optical path of the plurality of light beams included in the second light beam emitted from the split optical system, and changes an opening angle of each light beam of the plurality of light beams included in the second light beam emitted from the condensing optical system and an interval between respective condensing parts of the plurality of light beams included in the second light beam condensed on a condensing plane by the condensing optical system independently from each other by changing magnifications of the first magnification varying optical system and the second magnification varying optical system.

6. The optical processing apparatus according to claim 5, wherein
the second magnification varying optical system is an afocal system.

7. The optical processing apparatus according to any one of claim 1 to claim 4, wherein
the magnification varying optical system is disposed on the optical path of the plurality of light beams included in the second light beam emitted from the split optical system, and changes an opening angle of each light beam of the plurality of light beams included in the second light beam emitted from the condensing optical system and changes an interval between respective condensing parts of the plurality of light beams included in the second light beam condensed on a condensing plane by the condensing optical system by changing a magnification thereof.

8. The optical processing apparatus according to claim 7, wherein
the magnification varying optical system is an afocal system.

9. The optical processing apparatus according to any one of claim 1 to claim 4, wherein
the magnification varying optical system is disposed on the optical path of the first light beam entering the split optical system, and changes a diameter of the first light beam entering the split optical system by changing a magnification thereof.

10. The optical processing apparatus according to any one of claim 1 to claim 9, wherein the split optical system includes a diffractive optical element.

11. The optical processing apparatus according to any one of claim 1 to claim 9, wherein
the split optical system includes a reflective member.

12. The optical processing apparatus according to any one of claim 1 to claim 11, wherein

the optical processing apparatus further comprises a combining optical system configured to combine the second light beam from the split optical system with a third light beam different from the second light beam,
the condensing optical system condenses each of third light beam and the plurality of light beams included in the second light beam from the combining optical system.

13. The optical processing apparatus according to claim 12, wherein

the second light beam and the third light beam are light beams having different wavelengths, the combining optical system includes a dichroic mirror or a dichroic prism.

14. The optical processing apparatus according to claim 12 or claim 13, wherein
the optical processing apparatus further comprises a position detection unit configured to irradiate an object with the third light beam through the combining optical system and the condensing optical system and to detect a position of the object based on a fourth light beam that is a returned light of the third light beam from the object and that is detected through the condensing optical system and the combining optical system.

15. The optical processing apparatus according to any one of claim 1 to claim 14, wherein
the optical processing apparatus further comprises a light source apparatus configured to emit the first light beam entering the split optical system.

16. The optical processing apparatus according to any one of claim 1 to claim 15, wherein
the optical processing apparatus further comprises a sample table configured to support the object so that the object is irradiated with the second light beam from the condensing optical system.

17. The optical processing apparatus according to claim 1, wherein
the optical processing apparatus further comprises a reflection apparatus that is disposed on an optical path of the second light beam between the split optical system and the condensing optical system and that includes a swingable reflective surface that reflects the plurality of light beams included in the second light beam.

18. The optical processing apparatus according to claim 17, wherein
the reflective surface of the reflection apparatus swings so that respective condensing parts move along a second direction that intersects with a first direction, the respective condensing parts of the plurality of light beams, which are included in the second light beam condensed on a condensing plane by the condensing optical system, are arranged along the first direction.

19. The optical processing apparatus according to claim 18, wherein

the split optical system splits the first light beam so that the respective condensing parts are arranged along the first direction.

20. The optical processing apparatus according to any one of claim 17 to claim 19, wherein
an angle between axes along propagating directions of two adjacent light beams of the plurality of light beams included in the second light beam emitted from the split optical system is an acute angle.

21. The optical processing apparatus according to any one of claim 17 to claim 20, wherein
the magnification varying optical system includes: a first magnification varying optical system disposed on the optical path of the first light beam entering the split optical system; and a second magnification varying optical system disposed on the optical path of the plurality of light beams included in the second light beam between the split optical system and the reflection apparatus, and changes an opening angle of each light beam of the plurality of light beams included in the second light beam emitted from the condensing optical system and an interval between respective condensing parts of the plurality of light beams included in the second light beam condensed on a condensing plane by the condensing optical system independently from each other by changing magnifications of the first magnification varying optical system and the second magnification varying optical system.

22. The optical processing apparatus according to claim 21, wherein
the second magnification varying optical system is an afocal system.

23. The optical processing apparatus according to any one of claim 17 to claim 20, wherein
the magnification varying optical system is disposed on the optical path of the plurality of light beams included in the second light beam between the split optical system and the reflection apparatus, and changes an opening angle of each light beam of the plurality of light beams included in the second light beam emitted from the condensing optical system and changes an interval between respective condensing parts of the plurality of light beams included in the second light beam condensed on a condensing plane by the condensing optical system by changing a magnification thereof.

24. The optical processing apparatus according to claim 23, wherein
the magnification varying optical system is an afocal system.

25. The optical processing apparatus according to any one of claim 17 to claim 20, wherein
the magnification varying optical system is disposed on the optical path of the first light beam entering the split optical system, and changes a diameter of the first light beam entering the split optical system by changing a magnification thereof.

26. The optical processing apparatus according to any one of claim 17 to claim 25, wherein
the split optical system includes a diffractive optical element.

27. The optical processing apparatus according to any one of claim 17 to claim 25, wherein
the split optical system includes a reflective member.

28. The optical processing apparatus according to any one of claim 17 to claim 27, wherein
the optical processing apparatus further comprises a light source apparatus configured to emit the first light beam entering the split optical system.

29. The optical processing apparatus according to any one of claim 17 to claim 28, wherein

the optical processing apparatus further comprises a combining optical system configured to combine the second light beam from the split optical system with a third light beam different from the second light beam,
the condensing optical system condenses each of third light beam and the plurality of light beams included in the second light beam from the combining optical system.

30. The optical processing apparatus according to claim 29, wherein

the second light beam and the third light beam are light beams having different wavelengths,
the combining optical system includes a dichroic mirror or a dichroic prism.

31. The optical processing apparatus according to claim 29 or claim 30, wherein
the optical processing apparatus further comprises a position detection unit configured to irradiate an object with the third light beam through the combining optical system and the condensing optical system and to detect a position of the object based on a fourth light beam that is a returned light of the third light beam from the object and that is detected through the condensing optical system and the combining optical system.

32. The optical processing apparatus according to any one of claim 17 to claim 31, wherein
the optical processing apparatus further comprises a sample table configured to support the object so that the object is irradiated with the second light beam from the condensing optical system.

33. The optical processing apparatus according to claim 1, wherein

the plurality of light beams included in the second light beam are three or more light beams, the condensing optical system condenses each of the three or more light beams from the split optical system.

34. The optical processing apparatus according to claim 33, wherein
the split optical system splits the first light beam so that respective condensing parts of the three or more light beams, which are condensed on a condensing plane by the condensing optical system, are arranged along a predetermined direction.

35. The optical processing apparatus according to claim 33 or claim 34, wherein
an angle between axes along propagating directions of two adjacent light beams of the three or more light beams included in the second light beam emitted from the split optical system is an acute angle.

36. The optical processing apparatus according to any one of claim 33 to claim 35, wherein
the magnification varying optical system includes: a first magnification varying optical system disposed on the optical path of the first light beam entering the split optical system; and a second magnification varying optical system disposed on the optical path of the plurality of light beams included in the second light beam emitted from the split optical system, and changes an opening angle of each light beam of the plurality of light beams included in the second light beam emitted from the condensing optical system and an interval between respective condensing parts of the plurality of light beams included in the second light beam condensed on a condensing plane by the condensing optical system independently from each other by changing magnifications of the first magnification varying optical system and the second magnification varying optical system.

37. The optical processing apparatus according to claim 36, wherein
the second magnification varying optical system is an afocal system.

38. The optical processing apparatus according to any one of claim 33 to claim 35, wherein
the magnification varying optical system is disposed on the optical path of the plurality of light beams included in the second light beam emitted from the split optical system, and changes an opening angle of each light beam of the plurality of light beams included in the second light beam emitted from the condensing optical system and changes an interval between respective condensing parts of the plurality of light beams included in the second light beam condensed on a condensing plane by the condensing optical system by changing a magnification thereof.

39. The optical processing apparatus according to claim 38, wherein
the magnification varying optical system is an afocal system.

40. The optical processing apparatus according to any one of claim 33 to claim 35, wherein
the magnification varying optical system is disposed on the optical path of the first light beam entering the split optical system, and changes a diameter of the first light beam entering the split optical system by changing a magnification thereof.

41. The optical processing apparatus according to any one of claim 33 to claim 40, wherein
the split optical system includes a diffractive optical element.

42. The optical processing apparatus according to any one of claim 33 to claim 40, wherein
the split optical system includes a reflective member.

43. The optical processing apparatus according to any one of claim 33 to claim 42, wherein
the optical processing apparatus further comprises a light source apparatus configured to emit the first light beam entering the split optical system.

44. The optical processing apparatus according to any one of claim 33 to claim 43, wherein

the optical processing apparatus further comprises a combining optical system configured to combine the second light beam from the split optical system with a third light beam different from the second light beam,
the condensing optical system condenses each of third light beam and the plurality of light beams included in the second light beam from the combining optical system.

45. The optical processing apparatus according to claim 44, wherein

the second light beam and the third light beam are light beams having different wavelengths, the combining optical system includes a dichroic mirror or a dichroic prism.

**46.** The optical processing apparatus according to claim 44 or claim 45, wherein
the optical processing apparatus further comprises a position detection unit configured to irradiate an object with the third light beam through the combining optical system and the condensing optical system and to detect a position of the object based on a fourth light beam that is a returned light of the third light beam from the object and that is detected through the condensing optical system and the combining optical system.

**47.** The optical processing apparatus according to any one of claim 33 to claim 46, wherein
the optical processing apparatus further comprises a sample table configured to support the object so that the object is irradiated with the second light beam from the condensing optical system.

FIG. 1

FIG. 2

FIG. 3

FIG. 4

FIG. 5

FIG. 6

## INTERNATIONAL SEARCH REPORT

| International application No. |
| --- |
| PCT/JP2020/040446 |

**A. CLASSIFICATION OF SUBJECT MATTER**
Int. Cl. B23K26/067(2006.01)i
FI: B23K26/067

According to International Patent Classification (IPC) or to both national classification and IPC

**B. FIELDS SEARCHED**

Minimum documentation searched (classification system followed by classification symbols)
Int. Cl. B23K26/00-26/70

Documentation searched other than minimum documentation to the extent that such documents are included in the fields searched

| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2010-214431 A (DISCO INC.) 30 September 2010 (2010-09-30), paragraphs [0027]-[0071], fig. 1-8 | 1, 7-10, 15-16, 33-34, 37-41, 43, 47 |
| A | | 2-6, 11-14, 17-32, 35-36, 42, 44-46 |
| X | WO 94/29069 A1 (SEIKO EPSON CORP.) 22 December 1994 (1994-12-22), p. 8, line 14 to p. 33, line 7, fig. 1-37 | 1, 7, 15-16, 33-34, 38, 43, 47 |
| X | JP 2007-14989 A (SEIKO EPSON CORP.) 25 January 2007 (2007-01-25), paragraphs [0014]-[0031], fig. 1-8 | 1, 7, 15-16, 33-35, 38, 43, 47 |

☒ Further documents are listed in the continuation of Box C.  ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 21.12.2020 | 12.01.2021 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2020/040446 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 62-126630 A (NEC CORP.) 08 June 1987 (1987-06-08), p. 2, upper left column, line 16 to p. 3, upper left column, line 9, fig. 1-7 | 1-47 |
| A | WO 2005/084874 A1 (OLYMPUS CORP.) 15 September 2005 (2005-09-15), paragraphs [0058]-[0139], fig. 1-36 | 1-47 |

Form PCT/ISA/210 (continuation of second sheet) (January 2015)

INTERNATIONAL SEARCH REPORT
Information on patent family members

International application No.

PCT/JP2020/040446

| Patent Documents referred to in the Report | Publication Date | Patent Family | Publication Date |
|---|---|---|---|
| JP 2010-214431 A | 30.09.2010 | KR 10-2010-0105386 A | |
| WO 94/29069 A1 | 22.12.1994 | JP 2002-196347 A<br>US 6031201 A<br>description, column 7, line 39 to column 28, line 8, fig. 1-40<br>EP 656241 A1 | |
| JP 2007-14989 A | 25.01.2007 | (Family: none) | |
| JP 62-126630 A | 08.06.1987 | (Family: none) | |
| WO 2005/084874 A1 | 15.09.2005 | US 2006/0289410 A1<br>paragraphs [0084]-[0289], fig. 1-33<br>EP 1721695 A1<br>CN 1925945 A<br>KR 10-2006-0126799 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4994639 B
- US 5580300 A
- JP 5231883 B